# EUROPEAN PATENT APPLICATION

(11) **EP 1 265 398 A1**
(43) Date of publication of application: **11.12.2002**
(21) Application number: 01410067.1
(22) Date of filing: 08.06.2001
(51) Int. Cl.: H04L 12/26, H04L 29/06

(54) **Proces for personalizing a transaction through an internet or intranet network**

(71) Applicant: Hewlett Packard Company, a Delaware Corporation, Palo Alto, CA 94304 (US)
(72) Inventor: Moore, Michael, 38240 Meylan (FR)
(74) Representative: Lloyd, Richard Graham

(57) **Abstract**

A process for personalizing a transaction being currently executed in a communication between a computer (1) and a web server (3), said process involving the steps of monitoring the response time of the communication between the customer and, in response to said monitoring, modifying said current transaction. In one embodiment, the monitoring involves the comparison of the response time to a predetermined threshold value.

## Description

### Technical field of the invention

The invention relates to communication systems and more particularly to a process for personalizing transactions through the Internet or an Intranet network.

### Background art

The constant progress of the technology of information and that of the communication systems, particularly with the explosion of the Internet and Intranet networks, has resulted in the development of an era of information. With one single personal computer, any individual can get a connection to the Internet network and have a direct access to a wide range of information and business applications. As the use of the Internet and intranet network tends to be generalized, the possibilities of electronic transactions are substantially expanding.

Product manufacturers and marketers, as well as service providers are very concerned with the possibilities of personalizing the particular access which is offered to their potential customers. This is indeed a key aspect of the future development of the business transactions over the Internet network. As known in the art of electronic transaction business, a first possibility of personalization is based on the use of the personal or private data of the customers which these customers consent to leave behind them during their "visit". Although the product manufacturers and service providers make every effort to entice their customers to leave some personal data of their profile for the purpose of personalizing their next access to the web server, these customers are generally reluctant to leave important personal data relating to their profile.

Therefore, there is still a desire, in addition to the known techniques for personalizing access to web servers, to enhance the possibilities of personalization of the transactions which a product manufacturer or reseller, or a service provide, may offer to his customers and visitors.

It is a desire to make further possibilities of personalization available to the web designers, by adding new techniques that do not involve the use of private data voluntarily left by the customers to the web server administrator.

### Summary of the invention

It is an object of the present invention to enhance the possibilities for personalizing the transactions being carried out through an Internet network or an Intranet network.

This object is achieved by a process for personalizing a transaction, or a series of transactions, between a client device and a remote server comprising measuring the response time of the communication between the client device and the remote server and modifying the transaction, or a subsequent one of said transactions, according to the result of the measurement.

Preferably, the remote server is a web server and the response time being measured is used for automatically personalizing said transaction or subsequent one of said transactions.

In one embodiment the process involves the steps of:
- continuously measuring the delay involved between the precise instant a request is transmitted from the client device to the remote server and the instant when the client device receives the answer from said remote server;
- comparing said measured delay with a predetermined threshold value;
- in response to said delay being greater than said threshold value, automatically sending a HTML page to said client server containing appropriate information.

Preferably, the predetermined threshold is extracted from a database storing particular threshold values corresponding to particular customers. The process automatically, based on pre-configured triggers, based for instance on the value of the customer or the number of below-threshold results, modifies one transaction with one customer when the monitored response time exceeds one threshold value which corresponds to this particular customer. This is a substantial advantage since the mechanism takes into account the relative connections of the different customers. Therefore a customer having a slow modem, and who is accustomed to a slow connection, will not received more personalized offers than customers having fast connections.

In one embodiment, an Active X component is used for monitoring the delay between the precise instant a request is transmitted from the customer's computer to the web server and the instant when the customer receives the answer from said web server.

In another embodiment, java applets are used for monitoring that delay. Preferably, the transaction is based on the use of Hyper Text Mark-up Language (H.T.M.L.) messages and the process involves the transmission to the customer's computer of an HTML page including a reference to an Applet java code the execution of which causes the launching of a measurement process of the response time required for a response to a GET REQUEST command to be received within the customer's machine in accordance with the Hyper Text Transfer Protocol (H.T.T.P.) protocol. Once evaluated, the response time is reported into a database associated with the web server, and the process uses this evaluation for computing an average value of the response time. The monitored response time is continuously compared to the updated average value and when the ratio of the two values reaches a predetermined threshold value, the process causes the modification of the current transaction with the user.

In one embodiment, the measurements of the delay between the instant a request is transmitted to the web server and the instant at which the corresponding response is received by the customer's computer are sent to a central collecting server instead of the web server itself.

In one embodiment, the modification of the transaction is achieved by means of the generation of a new HTML page or a new block of a HTML page for the purpose of personalizing the transaction and taking into account degraded response time performance. Clearly, this technique is particularly adapted for the purpose of proposing special incentive offers in accordance with the measurement of the communication data rate. For instance, when the communication data rate falls below a predetermined value (corresponding to a given ratio mentioned above) then the web server can automatically generate a personalized HTML page which includes a special incentive offer to the customer;

In another embodiment, when the above mentioned ratio exceeds said threshold, then the web server can modify the number of elements, e.g. a number of graphical elements contained within a HTML page for the purpose of compensating the 'degraded data flow and maintaining the relative subjective data flow perceived by the user.

### Description of the drawings

An embodiment of the invention will now be described, by way of example only, with reference to the accompanying drawings, wherein:
Figure 1 illustrates the general architecture of the environment for an electronic transaction between an user and a remote web server through the Internet or an Intranet network.
Figure 2 is a flow chart of the process for automatically personalizing the transaction between the user and the web server.
Figure 3 is a flow chart of the process for measuring the response time of the communication between the user and the web server.

### Description of the preferred embodiment:

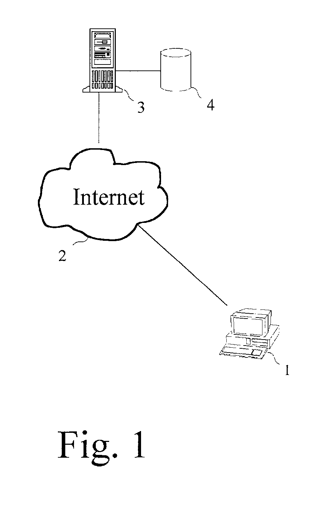

With reference to figure 1, there is shown the general environment wherein an user may initiate and complete an electronic transaction with a remote web server. The user's computer 1 - or client - includes a conventional browser such as, for instance, *Internet Explorer 4* or 5 (manufactured by Microsoft Corp.) or *Netscape Explorer* (manufactured by Netscape Communications Corp). The user can access a remote web server 2 via his computer 1 and the Internet network 2 (or an intranet network). The Web server 2 can be any web server which can be accessed through the Internet or intranet network, particularly through a Uniform Resource Locator address which is assigned to that server. In the preferred embodiment, the transaction between the web server and the user is a Hyper Text Markup Language (H.T.M.L.) based transaction, that uses the transmission of HTML pages to the user for the purpose of providing the products or services which can be transmitted to him. The remote web server 2 is associated with a database 4 which is used for personalization of the transaction between the web server and the different customers. The database may also be used for storing personal or private data which are provided by the customers when they are connected to the web servers as known in the prior art. In the preferred embodiment, the database 4 further stores a set of threshold values, at least one threshold value, which are used for automatically affecting the transaction being negotiated with the customer.

In the preferred embodiment, the web server 2 can be accessed by means of the Uniform Resources Locator (U.R.L.) assigned to it, and is prepared to accept and process commands and requests provided in accordance with the well known HTTP protocols. Preferably, the transactions between the user and the web server are based on HTML messages and the web server transmits HTML pages in accordance with the known HTML format.

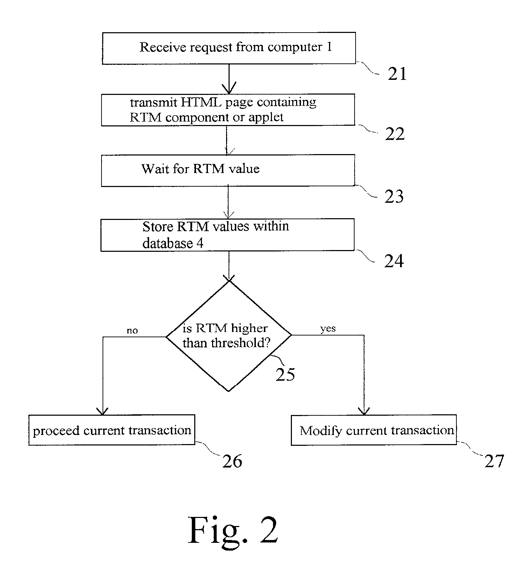

Figure 2 shows the basic process that is executed in the web browser for the purpose of automatically personalizing the transaction in accordance with the response time of the communication.

The process starts with a request, such as a GET REQUEST, which is received from the computer 1, in step 21.

The web server then launches a monitoring process for the purpose of getting an accurate measurement of the delay between that GET REQUEST and the corresponding response received in the user's computer. Any suitable technique can be used to carry out that measurement. In one embodiment, this monitoriing can be based on the use of an Active X component or a javascript. In the preferred embodiment of the process, there will be discussed the use of a java applet. This is done, in a step 22, by the creation and the transmission by the web server of anHTML page which contains a reference to a java applet of java, a so-called Response Time Measurement (RTM) Applet. As known by the skilled man, an HTML page can incorporate a reference to a java code, concretely the URL address and the reference of the file to be downloaded. In that case, the web browser fetches the latter at the specified addresses. The downloaded file is generally an aggregated file (generally archive.jar or archive.cab in accordance with the particular web browser) containing all the files (.class) which are needed for the execution of the java code, and which is automatically downloaded by the web browser, and executed in the virtual machine. In the case of a signed java code, a dialog box is displayed to the user in order to ask him to accept or reject the execution of the applet code with some extended capabilities. Indeed, in the more recent browsers, i.e. Netscape rel. 4 or Internet Explorer 4, there is provided a layer which allows the processing of signed objects (such as java code, javascript, active X for Internet Explorer....) with an appropriate signature process which is different for each browser. Such browsers are capable of receiving signed applets in the HTML pages, and thus expand and enhance the possibilities of the basic java code which is downloaded through the Internet network. As known by the skilled man, the java code is portable and can be executed in any machine, and particularly any browser provided that a java interpreter is therein available.

In step 23, the RTM Applet is executed, which results in the receiving, after the processing of the next GET REQUEST received from the computer 1, of an objective evaluation of the Response time of the web server, including the network channel. Techniques are known for achieving an objective evaluation of the response time of the network. Such techniques are used by network management systems for the purpose of collecting statistical information for the purpose of network management. A product marketed by the assignee of the present patent application is known under the reference of "WEB TRANSACTION OBSERVER'. Clearly, other techniques could be used, for instance the technique which is disclosed in US 6,078,956 entitled "world wide web end user response time monitor" or also US 6,006,260 entitled "method and apparatus for evaluating service to a user over the Internet". The process which is herein disclosed deviates the computation of the response time - traditionally used for statistical purposes - by incorporating that elementary step into a overall transaction process which is modified in response to the value being computed.

In step 24, the computed value of the RTM is stored within database 4 for the purpose of computing, in one particular embodiment, a corresponding predetermined threshold value which is personalized to the particular customer being considered.

In step 25, the process compares the RTM with at least one threshold.

If the RTM shows to be lower than the considered threshold which, in one embodiment, could be derived from the average value of the RTM measured during a given period, the process proceeds to step 26 where the current transaction being processed by the web server 3 remains unchanged.

Conversely, if the RTM reveals to be greater than the considered threshold value, then the process proceeds to step 27 where the current transaction is being modified.

The modification of the transaction could be based on the transmission of an incentive offer to the customer but, also, the modification could start with a dedicated process, for instance the reduction of the number of graphical and visual elements of the HTML page, for the purpose of personalizing the access to the web server 3 in accordance with the bandwidth and latency limitations of the communication pathbetween the customer and the web server.

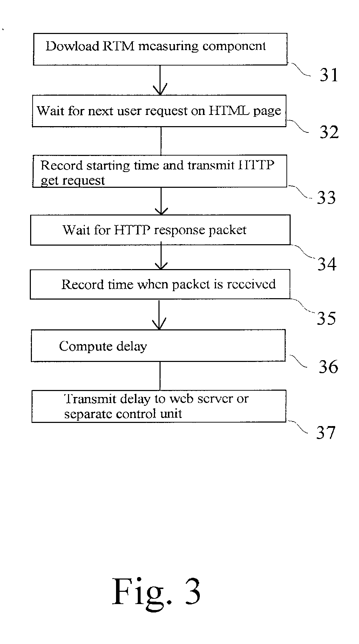

With reference to figure 3, there will be described how the objection evaluation of the response time is computed and reported to the web server 3. The computation is based on the following process being performed in the client's computer.

In a step 31 the process causes the downloading of the measuring component during the first H.T.T.P. request-reply roundtrip. Typically, this is carried out when the user downloads a home page.

In a step 32, the process waits for the next selection from the user on one item of the home page.

In response to the user actuating one item on the home page, for instance, the process then records in a step 33 the starting time and simultaneously prepares a corresponding H.T.T.P. GET request which is transmitted to the web server 3.

In a step 34, the process then waits for receipt of the corresponding H.T.T.P. packet from the web server.

In response to the H.T.T.P. packet, the process then records the corresponding receiving time in a step 36 and then, in a step 37, computes an estimation of the delay required for receiving that response packet.

In a step 37, the process transmits the estimation of the delay to the web server 3 for the purpose of controlling the current transaction. Alternatively, this can be achieved, in a particular embodiment, by means of the transmission of the estimation of the delay to a separate control unit (not shown in figure1) by means of a separate communication. This alternative permits the business web server to be clearly separated from the control measuring server.

Additionally, while the invention has been particularly described with reference with the widely used Internet Standard, with the HTTP protocols such as defined in the RFC 2616 for instance, it should be clear that this is only an example of embodiment and that other suitable protocols could equally be used.

## Claims

1. A process for establishing a transaction, or a series of transactions, at least one of which involves a communication between a client device (1) and a remote server (3), comprising measuring the response time of the communication between the client device and the remote server and modifying the transaction, or a subsequent one of said transactions, according to the result of the measurement.

2. Process according to claim 1 wherein the measurement of said response time is used for personalizing said transaction or said series of transactions.

3. Process according to claim 1 **characterized in that** it involves the steps of:
- continuously measuring the delay involved between a request transmitted by the client device from his machine to said remote server;
- comparing said measured delay with a predetermined threshold value;
- in response to said delay being greater than said threshold value, automatically sending a html page to said client device containing appropriate information.

4. Process according to claim 3 wherein said predetermined threshold is extracted from a database storing a set of values corresponding to different client devices.

5. Process according to claim 1 wherein said transaction is a Hyper Text Mark-up Language (H.T.M.L.) message based transaction and wherein the process involves the transmission of a HTML page which includes a reference to an applet code in java language which causes the execution of a measurement process of said response time to a GET REQUEST issued by the customer.

6. Process according to claim 5 wherein an average value of said response time is stored within said database and compared to the measured response time of said transaction(s).

7. Process according to claim 1 wherein modifies the number of graphical elements which are transmitted to said customer when the monitored response time reaches said predetermined value is modified.

8. Process according to anyone of the preceding claims **characterized in that** the monitoring and measurement of said response time is achieved by means of an Active-X object.

9. A transaction aid for assisting a transaction between an user and at least one remote server (3, 4), the or each said remote server being prepared to process at least one predetermined command, said transaction aid comprising program code elements for carrying a process as claimed in any preceding claim.

10. A transaction aid computer program product having program code elements for carrying out a process as claimed in any of claims 1 to 8.

11. An arrangement for providing electronic services comprising:
- a web server (3) for providing electronic transactions and services in response to the requests of a computer (1) connected to the Internet or to an Intranet network (2);
- a database (4) for storing predetermined threshold values corresponding to different customers;
- means for monitoring the response time of said transactions and,
- means for automatically modifying said transaction when said monitored response time reaches one predetermined threshold value.
